# EUROPÄISCHE PATENTSCHRIFT

(11) **EP 1 664 800 B1**
(45) Veröffentlichungstag und Bekanntmachung des Hinweises auf die Patenterteilung: **07.07.2010**
(21) Anmeldenummer: 04766377.8
(22) Anmeldetag: 30.07.2004
(51) Int. Cl.: G01P 1/02, F16B 5/06, F16B 21/02

(54) **BEFESTIGUNGSELEMENT FÜR EINEN SENSORKOPF**
FIXING ELEMENT FOR A SENSOR HEAD
ELEMENT DE FIXATION POUR TETE DE DETECTION

(30) Priorität: 15.09.2003 DE 10342863
(43) Veröffentlichungstag der Anmeldung: 07.06.2006
(73) Patentinhaber: Continental Automotive GmbH, 30165 Hannover (DE)
(72) Erfinder: JAKLIN, Ralf, 65835 Liederbach (DE)
(86) Internationale Anmeldenummer: PCT/EP2004/051669
(87) Internationale Veröffentlichungsnummer: WO 2005/026743

(56) Entgegenhaltungen:
- EP-A- 0 675 364
- DE-A- 3 626 052
- DE-A- 4 420 766
- GB-A- 1 438 880
- US-A- 5 428 289
- US-A- 5 762 425
- US-B1- 6 237 970

## Beschreibung

Die Erfindung bezieht sich auf ein an einem Befestigungsring ausgebildetes Befestigungselement für einen Sensorkopf, insbesondere für einen Sensorkopf zur Drehzahl- oder Drehwinkelmessung in einem Kraftfahrzeug, wobei der Sensorkopf ein Gehäuse aus Kunststoff mit mindestens einem daran ausgebildeten Gehäusefuß aufweist, das an dem Befestigungsring mit dem Befestigungselement befestigt ist und wobei der Befestigungsring zur Befestigung des Sensorkopfes an einem weiteren Bauteil, zum Beispiel einem Radlager, vorgesehen ist.

Sensorköpfe der eingangs genannten Art werden beispielsweise in Kraftfahrzeugen zur Erfassung der Drehzahl eines Rades verwendet. Dabei ist es üblich den Sensorkopf mit einem Befestigungsring, der zum Beispiel aus Metall bestehen kann, zu verbinden. Der Befestigungsring wird wiederum auf ein Radlager aufgesetzt, um mit dem Sensorkopf die Drehzahl des gelagerten Rades zu erfassen. Die Verbindung des Sensorkopfes mit dem Befestigungsring erfolgt nach dem Stand der Technik zum Beispiel durch Ultraschallverschweißung und/oder Umspritzung des Sensorkopfs an dem Befestigungsring.

Diese Art der Verbindung des Sensorkopfes am Befestigungsring sind relativ aufwendig und teuer.

Aufgabe der Erfindung ist es daher den Sensorkopf mit dem Befestigungsring besonders aufwandsarm und kostengünstig zu verbinden.

Dies Aufgabe wird erfindungsgemäß dadurch gelöst, dass das Befestigungselement als T-förmige, verdrehbare Lasche mit einem Haltestück ausgebildet ist, die durch eine durchgängige, hauptsächlich schlitz- oder langlochförmige Ausnehmung des Gehäusefußes greift, wobei das Haltestück der verdrehbaren Lasche außerhalb der Erstreckungsrichtung der langlochförmigen Ausnehmung auf dem Gehäusefuß aufliegt und der Gehäusefuß zwischen dem Haltestück und dem Befestigungsring eingeklemmt ist.

Alternativ dazu wird die Aufgabe auch dadurch gelöst, dass das Befestigungselement als U-förmig abbiegbare Lasche mit einem Haltestück ausgebildet ist, die durch eine durchgängige Ausnehmung des Gehäusefußes greift, wobei das Haltestück der umbiegbaren Lasche außerhalb der durchgängigen Ausnehmung auf dem Gehäusefuß aufliegt und der Gehäusefuß zwischen dem Haltestück und dem Befestigungsring eingeklemmt ist.

Durch die Ausbildung des Befestigungselementes als T-förmige, verdrehbare Lasche wird eine besonders einfache Befestigung des Sensorkopfes am Befestigungsring ermöglicht. Die Lasche muss hierzu nur durch die hauptsächlich schlitz- oder langlochförmige Ausnehmung des Gehäusefußes gesteckt werden und das Haltestück muss soweit verdreht werden, bis der Gehäusefuß zwischen dem Haltestück und dem Befestigungsring eingeklemmt ist. Diese Befestigungsweise ist besonders gut für eine maschinelle Fertigung geeignet.

Auch durch die Ausbildung des Befestigungselementes als U-förmig abbiegbare Lasche wird eine besonders einfache Befestigung des Sensorkopfes am Befestigungsring ermöglicht. Hierzu wird die U-förmig abbiegbare Lasche durch eine durchgängige Ausnehmung des Gehäusefußes gesteckt und das Haltestück wird so weit abgebogen, bis der Gehäusefuß zwischen dem Haltestück und dem Befestigungsring eingeklemmt ist. Auch dies erfolgt vorzugsweise im Rahmen einer maschinellen Fertigung.

Bei einer Weiterbildung besteht die T-förmige, verdrehbare Lasche aus einem Metall. Metalle lassen sich gut plastisch verformen, ohne frühzeitig zu brechen. Die T-förmige, verdrehbare Lasche ist als integraler Bestandteil des Befes-tigungsrings herstellbar. Aus einem Metallbefestigungsring lässt sich die T-förmige, verdrehbare Lasche leicht ausstanzen und in die gewünschte Stellung biegen.

Auch die U-förmig abbiegbare Lasche aus Metall lässt sich leicht aus einem Teil des Metallbefestigungsrings durch Stanzen und Biegen herstellen. Natürlich kann die T-förmige, verdrehbare Lasche oder die U-förmig abbiegbare Lasche aus Metall auch an den Befestigungsring angeschweißt oder angeklebt werden.

Ausführungsbeispiele der Erfindung sind in den Zeichnungen dargestellt und werden im Folgenden näher beschrieben. Es zeigen:
- Figur 1: einen Sensorkopf,
- Figur 2: eine perspektivische Ansicht des in Fig. 1 darge- stellten Sensorkopfes,
- Figur 3: einen seitlichen Schnitt durch den Sensorkopf,
- Figur 4: eine Draufsicht auf den Befestigungsring mit dem Sensorkopf.

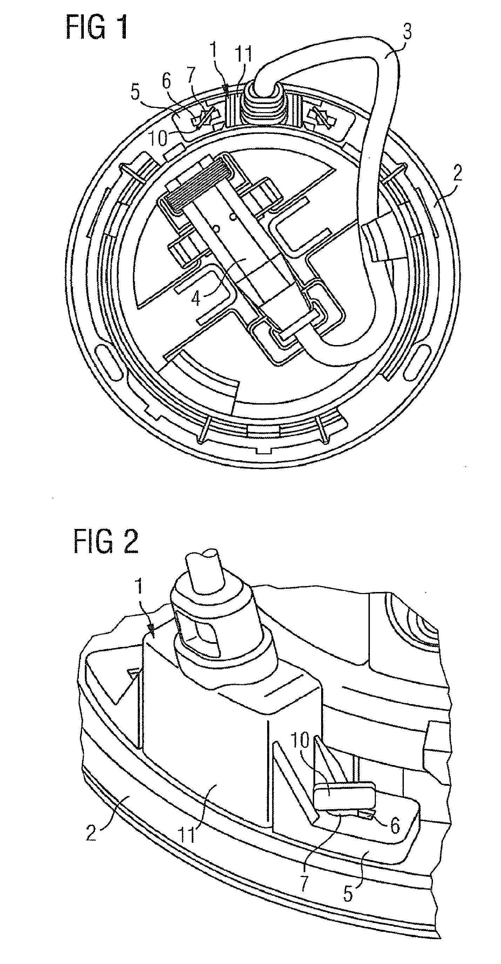

Figur 1 zeigt einen Sensorkopf 1 an einem Befestigungsring 2. Aus dem Sensorkopf 1 führt ein Kabel 3 zu einem Stecker 4. Die vom Sensor erfassten Signale werden über das Kabel 3 und den Stecker 4 der übrigen Fahrzeugelektronik zugänglich gemacht. Der Befestigungsring 2 wird auf ein hier nicht dargestelltes Lager aufgepresst. Die von diesem Lager erzeugten Signale können mit dem Sensorkopf 1 vermessen werden. Auf diese Weise kann zum Beispiel die Drehzahl eines Laufrades eines Kraftfahrzeugs bestimmt werden. Der Sensorkopf 1 weist ein Gehäuse 11 aus Kunststoff auf, dessen Bestandteil ein Gehäusefuß 5 ist. In den Gehäusefuß 5 ist eine durchgängige Ausnehmung 6 eingebracht. Eine am Befestigungsring 2 ausgebildete verdrehbare Lasche 7 ist durch die durchgängige Ausnehmung 6 des Gehäusefußes 5 geführt und soweit verdreht, dass das Haltestück 10 quer zur weitgehend schlitzartig ausgebildeten durchgehenden Ausnehmung 6 zu liegen kommt. Damit ist der Gehäusefuß 5 zwischen dem Haltestück 10 und dem Befestigungsring 2 eingeklemmt, wodurch der Sensorkopf 1 fest am Haltering 2 fixiert ist. Diese Form der Befestigung des Sensorkopfes 1 am Befestigungsring 2 ist sehr aufwandsarm durchführbar. Die beschriebene Befestigung des Sensorkopfes 1 am Befestigungsring 2 kann maschinell erfolgen, was die Herstellungskosten des gesamten Systems senkt.

Figur 2 zeigt eine perspektivische Ansicht des in Figur 1 dargestellten Sensorkopfes 1. Zu erkennen ist wiederum der Befestigungsring 2, der Sensorkopf 1 mit seinem Gehäuse 11 und dem Gehäusefuß 5. In den Gehäusefuß 5 ist eine hauptsächlich schlitz- oder langlochförmige Ausnehmung 6 eingebracht, durch die die verdrehbare Lasche 7 greift. Die Verdrehung der Lasche 7 erfolgt soweit, dass das Haltestück 10 nicht mehr durch die schlitz- oder langlochförmige Ausnehmung 6 rutschen kann. Damit ist der Gehäusefuß 5 zwischen dem Haltestück 10 der verdrehbaren Lasche 7 und dem Befestigungsring 2 eingeklemmt. Der Sensorkopf 1 ist somit fest an der vorgegebenen Position auf dem Befestigungsring 2 fixiert.

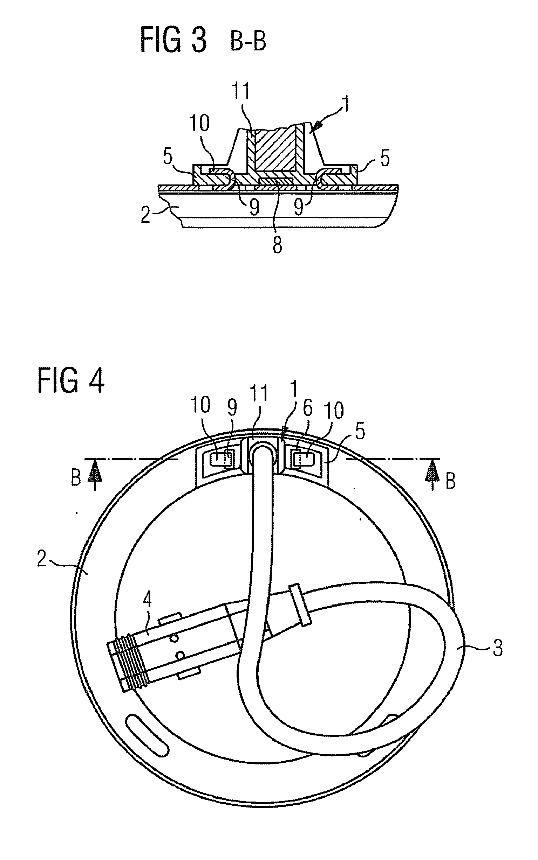

Figur 3 zeigt einen seitlichen Schnitt durch den Sensorkopf 1. Auch hier liegt der Sensorkopf 1 auf dem Befestigungsring 2 auf. In der Schnittdarstellung des Sensorkopfes 1 ist der eigentliche Sensor 8 zu erkennen. Der Sensor 8 ist vom Gehäuse 11, das in der Regel aus Kunststoff gefertigt ist, umgeben. Das Gehäuse 11 weist die Gehäusefüße 5 auf. Als Sensor 8 kann zum Beispiel ein Hallelement oder ein magnetischer Widerstand (MR-Element) verwendet werden.

Auch hier sind in die Gehäusefüße 5 durchgängige Ausnehmungen 6 eingebracht. Die umbiegbare Lasche 9 ist am Befestigungsring 2 ausgebildet und durch die durchgängige Ausnehmung 6 des Gehäusefußes 5 geführt. Wird die umbiegbare Lasche 9 U-förmig abgebogen, so kommt das Haltestück 10 auf dem Gehäusefuß 5 zu liegen. Damit ist der Gehäusefuß 5 zwischen dem Haltestück 10 der umbiegbaren Lasche 9 und dem Befestigungsring 2 eingeklemmt. Der Sensorkopf 1 und der darin angeordnete Sensor 8 kommen in der vorgegebenen Position auf dem Befestigungsring 2 zu liegen. Die umbiegbare Lasche 9 kann aus dem Material des Befestigungsrings 2 selber geformt sein, indem aus dem Befestigungsring 2 ein laschenförmiges Gebilde an einer vorher festgelegten Position ausgestanzt wird und so verbogen wird, dass es die umbiegbare Lasche 9 bildet, die durch die durchgängige Ausnehmung 6 geführt werden kann. Nach dem Umbiegen der Lasche 9 liegt das Haltestück 10 am Gehäusefuß 5 an. Damit ist der Gehäusefuß 5 fest zwischen dem Haltestück 10 und dem Befestigungsring 2 eingeklemmt.

Figur 4 zeigt eine Draufsicht auf den Befestigungsring 2 mit dem Sensorkopf 1. Aus dem Sensorkopf 1 führt das Kabel 3 zum Stecker 4, der die elektrische Anbindung des Sensors 8 an die übrige Fahrzeugelektronik ermöglicht. Auch hier ist der Sensorkopf 1 mit umbiegbaren Laschen 9 am Befestigungsring 2 fixiert. Erkennbar sind die Haltestücke 10 der umbiegbaren Laschen 9 die durch die durchgängigen Ausnehmungen 6 der Gehäusefüße 5 des Sensorkopfes 1 geführt sind. Durch die Befestigung des Sensorkopfes 1 mit einer umbiegbaren Lasche 9 oder einer verdrehbaren, T-förmigen Lasche 7 wird eine sehr genaue Positionierung des Sensorkopfes 1 auf dem Befestigungsring 2 möglich. Teure Schweißverfahren zur Befestigung des Sensorkopfes 1 am Befestigungsring 2 werden hierdurch nicht mehr benötigt. Daher ergibt sich durch die Befestigung des Sensorkopfes 1 mit einer verdrehbaren Lasche 7 oder einer umbiegbaren Lasche 9 am Befestigungsring 2 eine erhebliche Kosteneinsparung gegenüber den Befestigungsmöglichkeiten nach dem Stand der Technik.

## Patentansprüche

1. Sensoreinrichtung bestehend aus einem Befestigungsring (2), einem Sensorkopf (1) zur Drehzahl- oder Drehwinkelmessung in einem Kraftfahrzeug, sowie einem am Befestigungsring (2) ausgebildeten Befestigungselement für den Sensorkopf (1), wobei der Sensorkopf (1) ein Gehäuse (11) aus Kunststoff mit mindestens einem daran ausgebildeten Gehäusefuß (5) aufweist, das an dem Befestigungsring (2) mit dem Befestigungselement befestigt ist und wobei der Befestigungsring (2) zur Befestigung des Sensorkopfes (1) an einem weiteren Bauteil, zum Beispiel einem Radlager, vorgesehen ist, **dadurch gekennzeichnet, dass** das mindestens eine Befestigungselement als T-förmige, verdrehbare Lasche (7) mit einem Haltestück (10) ausgebildet ist, die durch eine durchgängige, hauptsächlich schlitz- oder langlochförmige Ausnehmung (6) des Gehäusefußes (5) greift, wobei das Haltestück (10) der verdrehbaren Lasche (7) außerhalb der Erstreckungsrichtung der langlochförmigen Ausnehmung (6) auf dem Gehäusefuß (5) aufliegt und der Gehäusefuß (5) zwischen dem Haltestück (10) und dem Befestigungsring (2) eingeklemmt ist.

2. Sensoreinrichtung bestehend aus einem Befestigungsring (2), einem Sensorkopf (1) zur Drehzahl- oder Drehwinkelmessung in einem Kraftfahrzeug, sowie einem am Befestigungsring (2) ausgebildeten Befestigungselement für den Sensorkopf (1), wobei der Sensorkopf (1) ein Gehäuse (11) aus Kunststoff mit mindestens einem daran ausgebildeten Gehäusefuß (5) aufweist, das an einem Befestigungsring (2) mit dem Befestigungselement befestigt ist, wobei der Befestigungsring (2) zur Befestigung des Sensorkopfes (1) an einem weiteren Bauteil, zum Beispiel einem Radlager, vorgesehen ist, **dadurch gekennzeichnet, dass** das mindestens eine Befestigungselement als U-förmig umbiegbare Lasche (9) mit einem Haltestück (10) ausgebildet ist, die durch eine durchgängige Ausnehmung (6) des Gehäusefußes (5) greift, wobei das Haltestück (10) der umbiegbaren Lasche (9) außerhalb der durchgängigen Ausnehmung (6) auf dem Gehäusefuß (5) aufliegt und der Gehäusefuß (5) zwischen dem Haltestück (10) und dem Befestigungsring (2) eingeklemmt ist.

3. Befestigungselement für einen Sensorkopf (1) nach Anspruch 1, **dadurch gekennzeichnet, dass** die T-förmige, verdrehbare Lasche (7) aus einem Metall besteht.

4. Befestigungselement für einen Sensorkopf (1) nach Anspruch 2, **dadurch gekennzeichnet , dass** die U-förmig umbiegbare Lasche (9) aus einem Metall besteht.

5. Befestigungselement für einen Sensorkopf (1) nach Anspruch 1 oder 3, **dadurch gekennzeichnet, dass** die T-förmige, verdrehbare Lasche (7) aus einem Teil des Befestigungsrings (2) geformt ist.

6. Befestigungselement für einen Sensorkopf (1) nach Anspruch 2 oder 4, **dadurch gekennzeichnet, dass** die U-förmig umbiegbare Lasche (9) aus einem Teil des Befestigungsrings (2) geformt ist.

7. Befestigungselement für einen Sensorkopf (1) nach Anspruch 1 oder 3, **dadurch gekennzeichnet, dass** dass die T-förmige, verdrehbare Lasche (7) an den Befestigungsring (2) geschweißt oder geklebt ist.

8. Befestigungselement für einen Sensorkopf (1) nach Anspruch 2 oder 4, **dadurch gekennzeichnet, dass** die U-förmig umbiegbare Lasche (9) an den Befestigungsring (2) geschweißt oder geklebt ist.

## Claims

1. Sensor arrangement consisting of a fixing ring (2), a sensor head (1) for measuring speed of rotation or angle of rotation in a motor vehicle, as well as a fixing element, designed on a fixing ring (2), for the sensor head (1), the sensor head (1) comprising a housing (11) made of plastic with at least one housing foot (5) designed thereon which is fixed to the fixing ring (2) by means of the fixing element, and the fixing ring (2) being intended for fixing the sensor head (1) to a further component, for example a wheel bearing, **characterized in that** the at least one fixing element is designed as a T-shaped, twistable lug (7) with a retaining piece (10), which lug extends through a continuous, mainly slot-shaped or long-hole-shaped cutout (6) of the housing foot (5), the retaining piece (10) of the twistable lug (7) lying on the housing foot (5) outside the direction of extension of the long-hole-shaped cutout (6) and the housing foot (5) being clamped between the retaining piece (10) and the fixing ring (2).

2. Sensor arrangement consisting of a fixing ring (2), a sensor head (1) for measuring speed of rotation or angle of rotation in a motor vehicle, as well as a fixing element, designed on a fixing ring (2), for the sensor head (1), the sensor head (1) comprising a housing (11) made of plastic with at least one housing foot (5) designed thereon which is fixed to a fixing ring (2) by means of the fixing element, the fixing ring (2) being intended for fixing the sensor head (1) to a further component, for example a wheel bearing, **characterized in that** the at least one fixing element is designed as a lug (9) which can be bent over in a U-shape with a retaining piece (10), which lug extends through a continuous cutout (6) of the housing foot (5), the retaining piece (10) of the lug (9) which can be bent over lying on the housing foot (5) outside the continuous cutout (6) and the housing foot (5) being clamped between the retaining piece (10) and the fixing ring (2).

3. Fixing element for a sensor head (1) according to Claim 1, **characterized in that** the T-shaped, twistable lug (7) is made of a metal.

4. Fixing element for a sensor head (1) according to Claim 2, **characterized in that** the lug (9) which can be bent over in a U-shape is made of a metal.

5. Fixing element for a sensor head (1) according to Claim 1 or 3, **characterized in that** the T-shaped, twistable lug (7) is formed from a part of the fixing ring (2).

6. Fixing element for a sensor head (1) according to Claim 2 or 4, **characterized in that** the lug (9) which can be bent over in a U-shape is formed from a part of the fixing ring (2).

7. Fixing element for a sensor head (1) according to claim 1 or 3, **characterized in that** the T-shaped, twistable lug (7) is welded or bonded to the fixing ring (2).

8. Fixing element for a sensor head (1) according to Claim 2 or 4, **characterized in that** the lug (9) which can be bent over in a U-shape is welded or bonded to the fixing ring (2).

## Revendications

1. Système détecteur composé d'une bague de fixation (2), d'une tête de détection (1) permettant de mesurer une vitesse de rotation ou un angle de rotation dans un véhicule automobile, ainsi que d'un élément de fixation pour la tête de détection (1) ménagé sur la bague de fixation (2), où la tête de détection (1) comporte un boîtier (11) en matière plastique avec au moins une base (5) de boîtier ménagée sur le boîtier, laquelle base est fixée à la bague de fixation (2) avec l'élément de fixation, et où la bague de fixation (2) est prévue pour fixer la tête de détection (1) sur une autre pièce, par exemple, un roulement de roue, **caractérisé par le fait que** le au moins un élément de fixation est réalisé sous forme de patte (7) en T qui peut être torsadée et comporte une pièce de retenue (10), ladite patte s'introduisant à travers un évidement (6) traversant de la base (5) du boîtier, principalement en forme de fente ou de trou oblong, la pièce de retenue (10) de la patte (7) qui peut être torsadée s'appliquant sur la base (5) du boîtier en dehors de l'évidement (6) oblong et la base (5) du boîtier étant serrée entre la pièce de retenue (10) et la bague de fixation (2).

2. Système détecteur composé d'une bague de fixation (2), d'une tête de détection (1) permettant de mesurer une vitesse de rotation ou un angle de rotation dans un véhicule automobile, ainsi que d'un élément de fixation pour la tête de détection (1) ménagé sur la bague de fixation (2), où la tête de détection (1) comporte un boîtier (11) en matière plastique avec au moins une base de boîtier (5) ménagée sur le boîtier, laquelle base est fixée à la bague de fixation (2) avec l'élément de fixation, et où la bague de fixation (2) est prévue pour fixer la tête de détection (1) sur une autre pièce, par exemple, un roulement de roue, **caractérisé par le fait que** le au moins un élément de fixation est réalisé sous forme de patte (9) en U qui peut être repliée et comporte une pièce de retenue (10), ladite patte s'introduisant à travers un évidement (6) traversant de la base (5) du boîtier, la pièce de retenue (10) de la patte (9) qui peut être repliée s'appliquant sur la base (5) du boîtier en dehors de l'évidement (6) traversant et la base (5) du boîtier étant serrée entre la pièce de retenue (10) et la bague de fixation (2).

3. Elément de fixation pour tête de détection (1) selon la revendication 1, **caractérisé par le fait que** la patte (7) en T qui peut être torsadée est en métal.

4. Elément de fixation pour tête de détection (1) selon la revendication 2, **caractérisé par le fait que** la patte (9) en U qui peut être repliée est en métal.

5. Elément de fixation pour tête de détection (1) selon la revendication 1 ou 3, **caractérisé par le fait que** la patte (7) en T qui peut être torsadée est formée par une partie de la bague de fixation (2).

6. Elément de fixation pour tête de détection (1) selon la revendication 2 ou 4, **caractérisé par le fait que** la patte (9) en U qui peut être repliée est formée par une partie de la bague de fixation (2).

7. Elément de fixation pour tête de détection (1) selon la revendication 1 ou 3, **caractérisé par le fait que** la patte (7) en T qui peut être torsadée est soudée ou collée à la bague de fixation (2).

8. Elément de fixation pour tête de détection (1) selon la revendication 2 ou 4, **caractérisé par le fait que** la patte (9) en U qui peut être repliée est soudée ou collée à la bague de fixation (2).
